# EUROPEAN PATENT SPECIFICATION

(11) **EP 3 322 280 B1**
(45) Date of publication and mention of the grant of the patent: **30.12.2020**
(21) Application number: 16823596.8
(22) Date of filing: 13.07.2016
(51) Int. Cl.: A01D 41/12, A01D 75/00, A01F 12/42, A01F 12/44

(54) **WEED SEED DESTRUCTION**
ZERSTÖRUNG VON UNKRAUTSAMEN
DESTRUCTION DE GRAINES DE MAUVAISES HERBES

(30) Priority: 14.07.2015 US 201562192111 P
(43) Date of publication of application: 23.05.2018
(60) Divisional application: 19194809.0 / 3 590 319
(73) Proprietor: Mayerle, Dean, Saskatoon, Saskatchewan S7K 3J7 (CA)
(72) Inventor: Mayerle, Dean, Saskatoon, Saskatchewan S7K 3J7 (CA)
(74) Representative: Franke, Dirk
(86) International application number: PCT/CA2016/050823
(87) International publication number: WO 2017/008161

(56) References cited:
- WO-A1-99/33333
- WO-A1-2009/100500
- WO-A1-2009/100500
- WO-A1-2014/127408
- WO-A1-2014/127408
- WO-A2-00/76294
- AU-A- 3 796 695
- DE-A1-102010 032 156
- FR-B1- 2 776 468
- US-A- 2 775 174
- US-A- 3 448 933
- US-A1- 2004 132 517
- US-B2- 6 908 379

## Description

This invention relates to a weed seed destructor which can be attached to a combine harvester so that weed seeds in the discharged chaff can be devitalized before being spread onto the ground.

### BACKGROUND OF THE INVENTION

Combine harvesters harvest cereal grain crops, such as wheat, oats, rye, barley, corn, soybeans and flax. Grain and straw are separated in a combine harvester. Following the separation process, waste straw and chaff is supplied to a chopper for shredding and distributing back over the field in an even spread pattern.

During the harvesting process weed seeds and grain seed are discharged with the residue into the chopper and spread back onto the field. The combine is then effectively acting as a seeder to evenly spread the seed back onto the field. In a number of areas of the world herbicides are used heavily to control the weed seeds however this has led to weed and grain seed that has become resistant to the herbicide.

It is known that if the seed can be removed or destroyed before the combine spreads it back onto the field the cycle can be stopped. Research has shown that, with three consecutive cycles of weed and grain removal, significant reductions in herbicide can be obtained providing huge saving for farmers.

One recent approach is shown in WO 2014/127408 published August 28th 2014 and assigned to Grains Research Development Corporation Australia which shows that a plurality of impacts at relatively high speed of the seeds with a stationary object causes breakdown of the seed sufficient to prevent germination. Thus they have developed a cage mill which is integrally mounted inside the combine harvester so as to receive waste material (discarded seeds and chaff) from the sieve. The cage mill assembly includes at least one rotating ring carrying a plurality of blades and a series of outer stationary rings or fixed blades. Thus the seeds are accelerated outwardly by escaping centrifugally from the rotating blades into the surrounding stationary blades of the outer rings where a series of impacts occur as the seeds move outwardly into and through the fixed blades. The seeds are released outwardly under the centrifugal force from the stationary blades and escape outwardly into a peripheral channel for discharge.

The document shows evidence that four impacts at relatively high speed are sufficient to cause the required breakdown of the seeds, for example to obtain a 95% kill rate.

However the cage mill shown is large and complex with numerous rings running in opposite directions. Should a rock, or other hard material enter the mill, the entire cage mill would need to be replaced. Thus the system may function to destroy the seeds but has practical difficulties as it is without consideration of other obstacles passing through the assembly. The assembly runs at a very high rotational speed, so the precision in manufacturing is critical. Although this is believed that this arrangement is closer to commercialization a number of problems remain with the design.

US Patent 3,448,933 (Roy) issued June 10 1969 describes a cone style grinding shear mill used to process weed seed. All excess chaff and weed seed is processed by the unit. However it is a permanently fixed grinder without a means to bypass material other than residue. It would also allow passage of small fine seeds as it would need to be set to the average seed size to allow adequate throughput.

US Patent 5,059,154 (Reyenga) issued October 22 1991 discloses a pair of rollers to mill seeds smaller than grain that are in the clean grain auger. This does not address seeds thrown over the back of the sieve and would not work if placed behind the sieve as today's combines the chaff stream is often 6 inches thick which would cushion the seeds and allow the spread of live seed back onto the field.

In AU Published Application 2001/038781 an additional sieve is added to remove more of the chaff before milling, and separate the weed seed from the grain. However this is not practical with today's combines. All combines throw out some grain and farmers want the herbicide tolerant grain removed as well.

US Patent 8,152,610 (Harrington) issued April 10 2012 discloses an arrangement which processes all the chaff coming off of the sieves and blows it to a trailing cart to pulverize all of the residue. The cart requires a second engine running in the dust of the combine and the mill requires a significant amount of power to pulverize and discharge the residue back onto the field. The cage mill disclosed is large and complex with numerous rings running in opposite directions. Again, the rings have not removable parts so should a rock, or other hard material enter it the entire cage mill would need to be replaced. The cost of this system will limit its commercial viability.

The term weed seed destruction used herein is used somewhat colloquially in that the seeds are not annihilated but are devitalized or rendered so that they cannot germinate. It will of course also be appreciated that not necessarily each and every seed is destroyed but that the intention is that a significant number will be incapable of germination so as to reduce the number of emerging seeds in the growing season.

### SUMMARY OF THE INVENTION

According to the invention there is provided an apparatus for destroying weed seeds according to claim 1.

In the preferred arrangement described in detail hereinafter, the rotor rotates around an axis so as to direct the discarded seeds centrifugally outwardly, and the stator surrounds the axis so as to rebound the discarded seeds back toward the axis and the discharge opening is arranged such that the discarded seeds discharge axially from within the stator.

In one arrangement the rotor is mounted directly under the first discharge location of the combine harvester with the rotor axis generally upright so that the feed material fold directly into the top of the housing on to the rotor along the axial direction of the rotor.

As an alternate embodiment the apparatus comprises a horizontally rotating tube, with auger fighting in the middle, moving the feed material or chaff to an impact zone at each end of the horizontal rotor. The discharge zone is then at the end and is arranged to expel into the straw chopper of the combine harvester.

Preferably the feed material enters the housing axially of the rotor at one end and discharges axially from the opposite end of the rotor.

Preferably there is provided a fan component for driving the discarded seeds from the opposite end radially outwardly.

Preferably the stator includes a plurality of stator surfaces spaced angularly around the axis.

Preferably the stator surfaces are arranged at an angle to a tangent of an imaginary cylindrical surface surrounding the axis.

Preferably the angle of the stator surfaces to the tangent is adjustable.

Preferably the stator surfaces and/or the rotor surfaces are arranged to pivot so as to increase the spacing therebetween to allow the passage of foreign objects between the rotor and stator.

Preferably the stator surfaces are readily removable for replacement when damaged or worn.

Preferably the stator surfaces include one or more fins extending generally around the axis.

Preferably the housing when viewed in plan longitudinal of the axis of the rotor is of polygonal shape to define a plurality of apexes at angularly spaced positions around the axis and the stator surface in plan view includes a plurality of pairs of stator surfaces which form a V shape converging to a respective one of the apexes.

Preferably the rotational speed of the rotor is adjustable to change the number of impacts a seed encounters during its passage.

Preferably the velocity of air along the rotor is adjustable to change the number of impacts a seed encounters during its passage.

Preferably the rotor and the stator are arranged so that the impacts act to move the discarded seeds along the rotor so as to change the position along the rotor at which the impacts of the discarded seeds occurs.

Preferably there is provided two housings each including a rotor and stator arranged side by side across the width of the discharge location.

Preferably each of the housings is rotatable about the axis of the respective rotor to change an angle of the discharge around the axis.

### BRIEF DESCRIPTION OF THE DRAWINGS

One embodiment of the invention will now be described in conjunction with the accompanying drawings in which:
Figure 1 is an isometric view of an apparatus for destruction of weed seeds according to the present invention which is arranged in a first embodiment where the weed seed destruction section is mounted at a position on a combine harvester at the rear of the sieve so as to discharge the chaff and destroyed seeds away from the straw chopper to both sides of the combine harvester.
Figure 2 is an isometric view from the front and one side of the combined apparatus including the straw chopper section and the weed seed destruction section of Figure 1.
Figure 2A is an isometric view from the rear and the other side of the combined apparatus including the straw chopper section and the weed seed destruction section of Figure 1.
Figure 3 is an isometric view of the weed seed destruction section of Figure 1 separate from the combine harvester with the discharge housing arranged for discharge to the sides.
Figure 4 is a top plan view of the weed seed destruction section of Figure 3 separate from the combine harvester with the discharge housing arranged for discharge to the rear.
Figure 5 is an isometric view of the weed seed destruction section of Figure 3 with a part of the housing removed.
Figure 6 is an isometric view of the weed seed destruction section according to the present invention which is arranged to feed the discharged material into the chopper rotor of the straw chopper section at the center thereof.

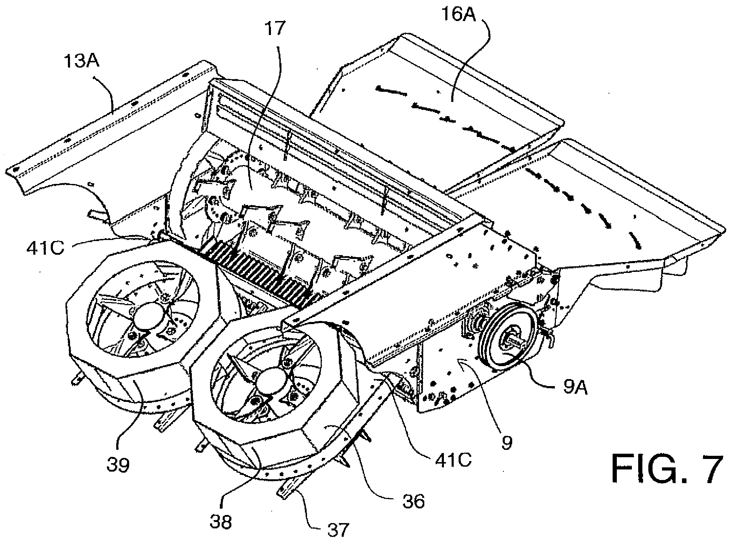

Figure 7 is an isometric view of the apparatus of Figure 6 adjusted to feed the discharged material into the straw chopper section at the sides so as to bypass the rotor and feed directly onto the tailboard.
Figure 8 is a side elevational view of the apparatus of Figure 2 showing the drive system to the combined apparatus including the straw chopper section and the seed destructor section.

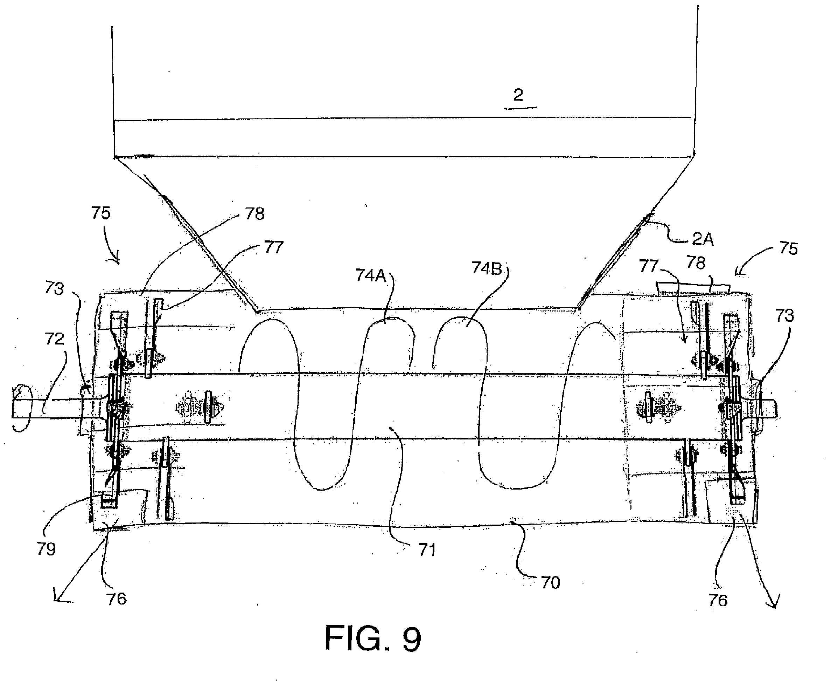

Figure 9 is a plan view of an alternative arrangement of the weed seed destruction section where the rotors are arranged to rotate about a horizontal axis and thus rotate in a vertical plane to discharge rearwardly.

In the drawings like characters of reference indicate corresponding parts in the different figures.

### DETAILED DESCRIPTION

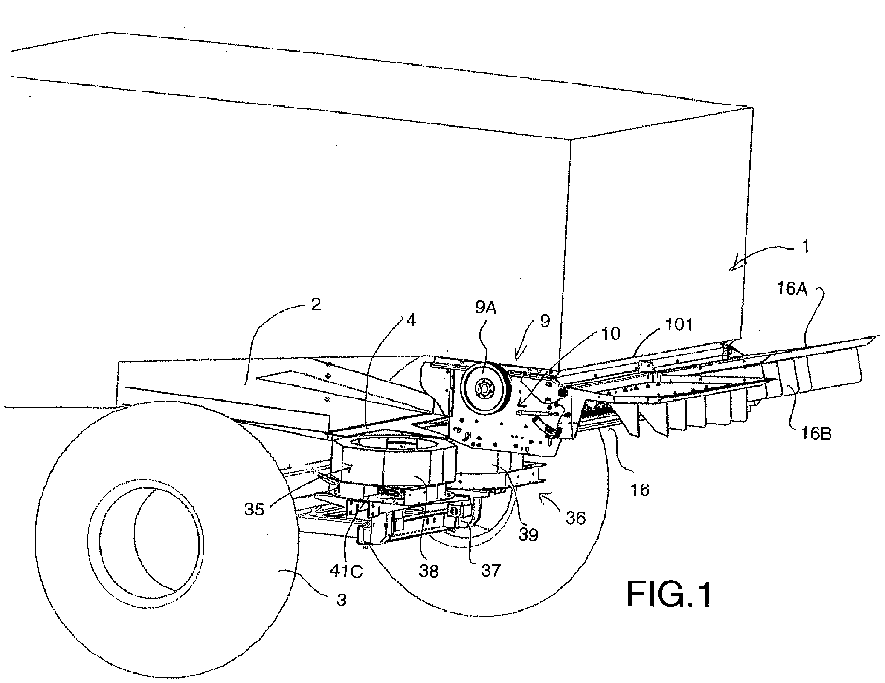

The apparatus herein is shown in Figure 1 mounted on a combine harvester 1 carried on ground wheels 3 and including harvesting components of a conventional nature the rearmost one of which is the sieve 2 which discharges chaff and discarded seeds including weed seeds to the rear edge 4 of the sieve.

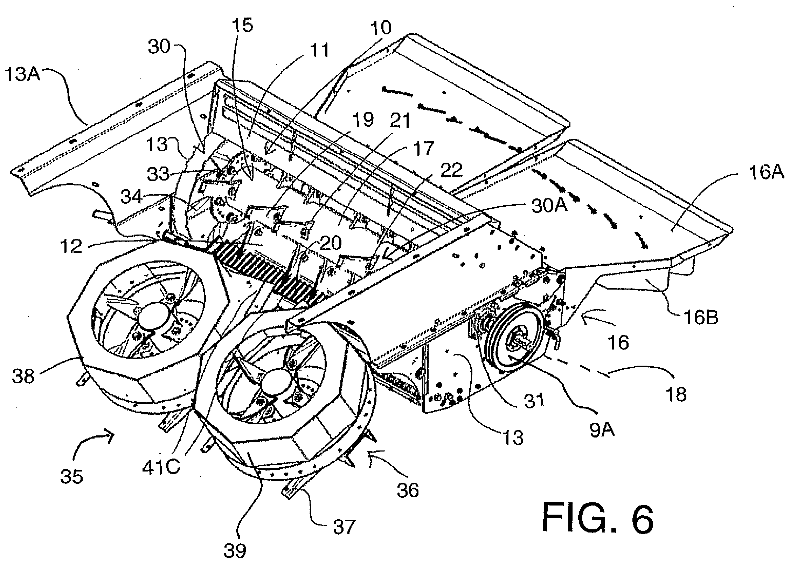

The combine harvester includes a chopper and discharge arrangement 9 shown in Figures 1 and 6 is basically as shown in US Patent 6840854 issued January 11 2005 of Redekop, to which reference may be made. The chopper thus comprises a housing 10 defined by a top wall 11, a bottom wall 12 and two end walls 13. The end walls 13 include attachment means 13A for attachment of the housing to the outlet of a combine harvester for discharge of straw and optionally chaff from the combine harvester into an inlet opening 15 of the housing 10. The bottom wall 12 defines a semi-cylindrical portion extending from the inlet 15 to an outlet 16 through which chopped straw and air is discharged at relatively high velocity for spreading across the field or for transportation into a container.

Within the housing is mounted a hub 17 which is carried on suitable bearings 31 for rotation about a hub axis 18 at a center of the housing so that blade members 19 carried by the hub sweep around within the housing to entrap straw fed through the inlet 15 and to carry the straw and air past stationary blades 20 for chopping and for discharge through the outlet 16. The stationary blades 20 are mounted on the housing at a position approximately midway between the inlet 15 and the outlet 16 so that the blade members 19 sweep between the stationary blades in a cutting action.

The hub 17 carries a plurality of lugs 21 at angularly and axially spaced positions therealong with each lug mounting a pair of blades 19 for pivotal movement of the blade members 19 about a pin 22 parallel to the axis 18. Each of the lugs 21 carries a pair of the blades 19. Each lug 21 is aligned with a respective one of the stationary blades 20 so that each stationary blade has associated with it a respective one of the lugs and thus has associated with it the pair of blades carried by that lug.

In this arrangement of the chopper, there is provided three axially spaced sections of the chopper assembly including a first fan section 30 at one end of the hub 17 and the second fan section at the other end of the hub 17. in-between the two narrow fan sections 30 is defined a center section 30A which provides the whole of the cutting action.

Within the center section 30A all of the blades 19 are formed with a cutting edge lying in a radial plane of the axis. The blades are preferably of the conventional flat blade type with a leading and trailing chamfered edge. Thus each of the two cutting blades 19 in the center section can pass closely on either side of a respective one of the stationary blades 20. Thus the stationary blades can be spaced by a distance which is just sufficient to allow the passage there between of the preferably flat cutting blade. In the preferred arrangement, the spacing between the stationary blades is thus small in that the stationary blades are not sufficiently spaced to allow the passage there between of a fan type blade.

In the fan sections 30, there is provided a ring 33 which is mounted on the hub 17 at a respective end of the hub. The ring thus surrounds the cylindrical wall of the hub and stands outwardly therefrom just beyond the end of the center section defined by the stationary blades and the blades 19 carried on the hub.

The rings 33 each carry a plurality of fan blades 34 at spaced positions around the ring. The fan blades 34 are arranged thus so that each follow directly behind the next at the same axial location.

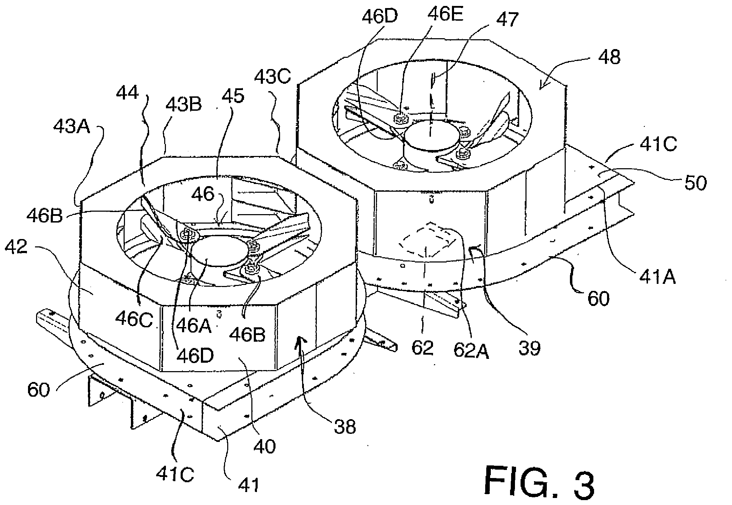

Each of the fan blades 34 is bent with a fan blade portion so that each of the fan blades is of the shape shown in Figure 3 of US patent 5,482,508 of Redekop, to which reference may be made. However the fan blades 34 do not necessarily have a sharpened leading edge since there is intended to be no cutting action in the fan section. Thus the fan blades are spaced from the end most stationary blade 19 so that in effect no cutting action occurs in this section.

The bent fan blade portion stands outwardly to one side of the flat plate portion of the fan blade 34. The fan blade portion which is bent at right angles to the main body of the fan blade is maximised in dimension so that it may be rectangular. This large blade area together with the presence of the six blades provides a large fan blade area which generates a significant air flow.

The fan blade portion is inclined forwardly and outwardly so that at a regularly outer position toward the outer end of each fan blade the fan blade portion is angularly advanced relative to its position closer to the axis of the hub. This incline outwardly and forwardly significantly increases the air flow effect driving the air in the greater volume and at higher speed radially from the fan section and outwardly of the exit 16.

Preferably the fan section comprises only a single row of the six fan blades but in some cases an additional row or rows may be provided although this is not preferred. The fan blades are arranged immediately adjacent the end walls 13 so that they take up minimum space at the end of the chopper assembly. It will be appreciated that the intention is to provide maximum air flow in the fan sections while taking up minimum dimensions so that the maximised chopping effect to provide shortest material is achieved within the center section using the flat blades.

The above arrangement of straw chopper section is one example only of arrangements which can be used herein.

The chopper and spreading assembly 9 is arranged to be mounted at a rear straw discharge 101 of the combine harvester 1 and includes the housing 10, the rotor 17 mounted in the housing 10 for rotation around a generally horizontal axis and carrying the plurality of chopper blades 19 for chopping the discharge material.

At the exit 16 is provided the material spreading assembly which can be the form of a tailboard 16A with guide fins 16B for receiving the chopped material and spreading the material to the rear and sides of the combine harvester.

An apparatus 35 for destroying seeds comprises a body 36 carried on a frame 37 mounted at a suitable location on the combine harvester by mounting arrangements of a conventional arrangement. The body provides two side by side housings 38, 39 each located adjacent a respected half of the discharge location the feed material containing separated chaff and discarded seeds separated by the combine harvester from harvested crop. In the embodiment shown in Figure 1, the housings are located at the rear edge 4 of the sieve 2.

Each of the housings, as best shown in Figures 3, 4 and 5 includes an upper impact section 40 and a lower fan section 41. The upper section 40 includes a housing 42 which is polygonal (in this example octagonal) in plan view with apexes 43A, 43B, 43C etc. The housing 42 incudes a top wall 44 connected to the polygonal side wall and defining a circular opening 45 arranged to be mounted at the discharge location of a combine harvester for receiving from the sieve the chaff and discarded seeds including the weed seeds.

A rotor 46 is mounted in the housing for rotation about an upstanding axis 47 at right angles to a bottom base of the housing axis. The rotor includes a cylindrical hub 46A carrying upper and lower sets of blades 46B and 46C. The sets are spaced axially. The individual blades of the set are spaced angularly. The sets are carried above and below respectively a series of angularly spaced lugs 46D on pins 46E so as to act as flails.

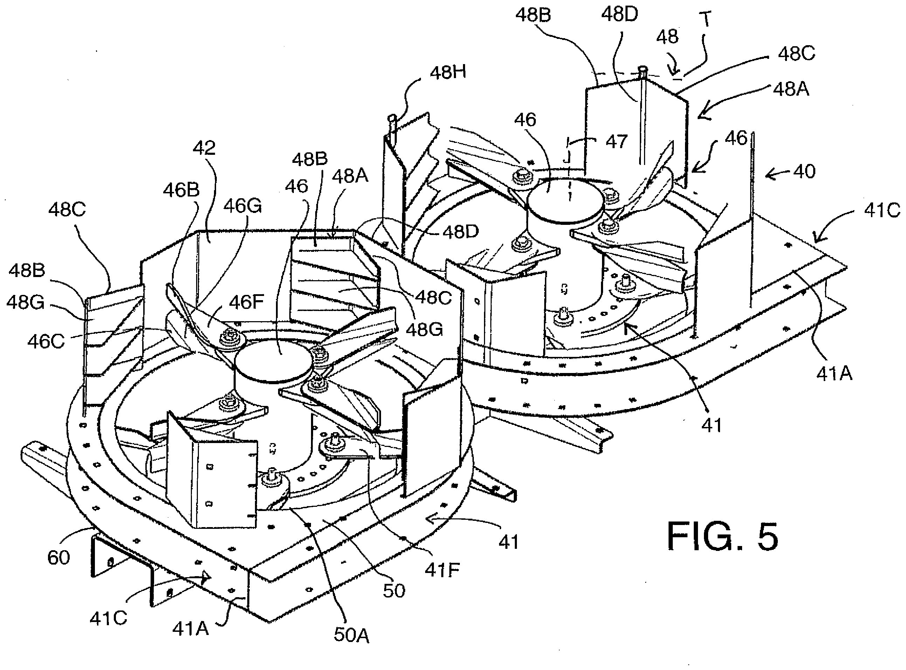

Each blade includes as best shown in Figure 5 a base plate 46F lying in a radial plane and a blade portion 46G turned out of the radial plane so as to act as a fan blade to drive entrained air and the material centrifugally outwardly from the axis of the rotor.

Thus the rotor includes components thereon defined by the two sets of blades for engaging the feed material and for accelerating the feed material in a centrifugal direction away from the rotor.

In the housing around the rotor is provided a stator 48 defined by the inside surface of the polygonal housing 40 and arranged at a location centrifugally outside the rotor 46 so that the material and discarded seeds thrown outwardly impact on the stator. The stator includes a series of surface elements 48A for engaging the discarded seeds in the accelerated material and arranged such that the discarded seeds impact thereon and rebound therefrom back toward the rotor.

Thus the rotor 46 and stator 48 are arranged such that the discarded seeds rebound back and forth between the rotor 46 and the stator 48 to provide a plurality of impacts on the feed material to destroy the seeds.

The housing includes a discharge opening defined by a circular inner edge 50A of a plate 50 lying in a radial plane of the housing between the impact section 40 and the fan section 41. Thus the bottom of the impact section is defined by the bottom plate 50 so that air and the entrained material is directed downwardly into the fan section for discharge of the feed material after the plurality of impacts. As the air and entrained material passes downwardly, the discarded seeds discharge from the rotor and do not pass or escape outwardly through the stator 48. That is the stator wholly or substantially wholly surrounds the rotor section to prevent the seeds from escaping radially. That is all of the seeds are rebounded back inwardly to the rotor and move downwardly while rebounding back and forth until they pass out of the impact section at the bottom through the hole 50A in the plate 50 into the fan section 41.

Thus the rotor 46 rotates around the axis 47 so as to direct the discarded seeds centrifugally outwardly. The stator 48 surrounds the axis 47 so as to rebound the discarded seeds back toward the axis and the discharge opening is arranged such that the discarded seeds discharge axially from within the stator. In this way, the feed material containing the discarded seeds enters the housing axially of the rotor at the top end and discharges axially from the bottom end of the rotor into the fan section, where the material is accelerated radially outwardly into a channel defined by a peripheral wall 41A which spirals gradually outwardly from a leading edge to a trailing edge 41B so as to define an outlet location 41C.

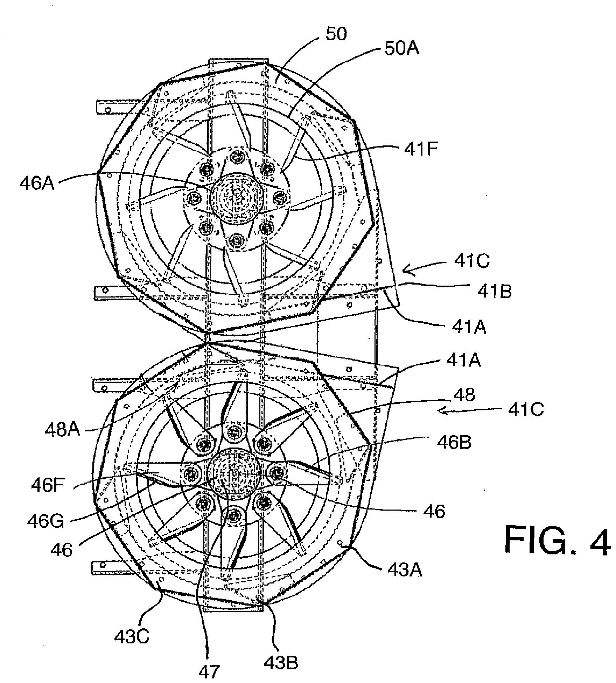

Thus the fan section 41 shown in plan in Figure 4 at the top includes a series of blades 41F carried on the rotor 46A underneath the plate 50 so that the fan components act for driving the discarded seeds from the opposite or bottom end of the rotor 46 radially outwardly to the discharge opening 41C at the trailing edge 41B.

As best shown in Figure 5, each of the stator surfaces 48A comprises a generally V-shaped body with two walls 48B and 48C converging to an apex 48D which is located at one of the apexes of the polygonally shaped housing. In Figure 5 is shown one of the stator surfaces 48A and it will be noted that the wall 48C against which the seeds are primarily directed as the rotor 46 turns clockwise is arranged at an angle to a tangent T of an imaginary cylindrical surface surrounding the axis. Thus the surface 48C is inclined forwardly and inwardly so that the seeds moving with the rotor and outwardly of the rotor impact against the surface 48C and are rebounded inwardly. The stator surface portion 48A is mounted at the apex 48D by a hinge pin 48H which allows the angle of the stator surface 48C to the tangent T to be adjustable to change the level of aggression in the rebound action.

Also the hinged mounting of the stator surface portion 48A allows the stator surfaces to pivot to allow the passage of foreign objects between the rotor 46 at the outer tip of the blades 46B, 46C and stator as defined by the surface portions 48A. Also the stator surface portions are readily removable for replacement by pulling the support pin 48H when damaged or worn.

Also the stator surface portions 48A include one or more fins 48G lying in a plane at right angles to the walls 48B, 48C and thus extending in a radial plane around the rotor. The stator has an octagonal shape and there are four of the stator surface portions 48A at four of the apexes of the polygon leaving the remainder of the inner surface of the octagon exposed to act as the stator surface. This stator surface surrounds the whole of the rotor and hence prevents outward escape of any material, thus confining the material to move downwardly into the fan section for ejection.

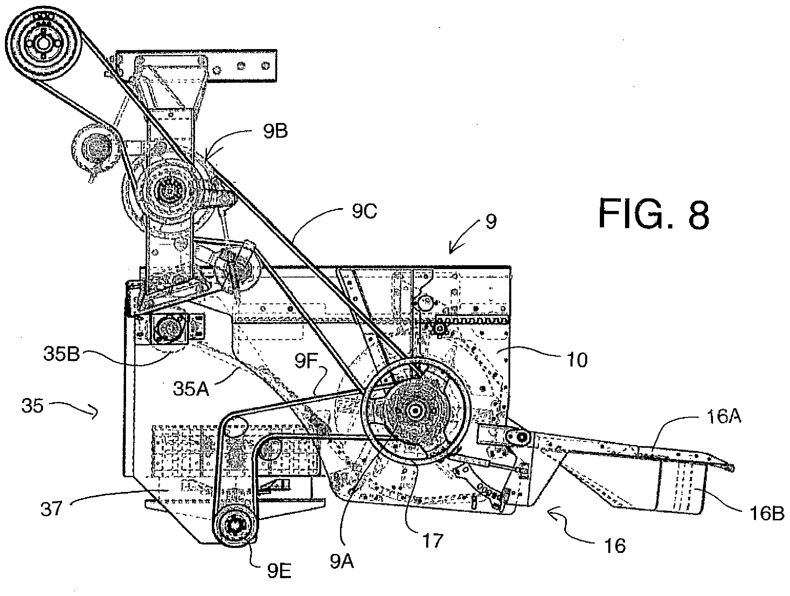

The rotor 46 which carries both the blades of the impact section and fan blades 41F of the discharge fan section 41 as best shown in Figure 8, is driven by a hydraulic drive motor 46H, the rotational speed of which is adjustable to change the speed of the impact blades and thus the number of impacts a seed encounters during its passage.

Also the velocity of air along the rotor through the impact section from the opening at the top plate 44 to the discharge plate 50 is adjustable to change the number of impacts a seed encounters during its passage.

The rotor and particularly the stator are shaped and arranged so that the impacts and rebounding action act to move the discarded seeds along the rotor from the feed opening at the top plate 44 to the discharge opening at the plate 50 so as to change the position along the rotor at which the impacts of the discarded seeds occurs. Thus the seeds as they rebound back and forth move through the impact section at a rate depending on the shape and position of the stator surfaces and depending on the rotation rate of the rotor and the air speed through the impact section.

In a typical walker style combine there is a large space between chopper 9 and the end of the sieve 2. In this case the seed destructor 36 is mounted at the end of the sieve 2. In this position, the discharge openings 41C of the fan section 41 are located by rotating the housings 38, 39 so that the seed destructor discharge is set to the side because the discharges are not close enough to the chopper 9 to allow feeding into the chopper.

The seed destructor is made up of two rotating drums or rotors 46 within the housings 38 and 39 rotating in opposite directions. The housings are rotatably mounted on the frame 37 so that the discharge 41C can be pointed in the direction required. Although this is shown as a fixed mounting it could be easily designed as a movable mounting so the operator could change it quickly as desired. In one arrangement the adjustment can be obtained conveniently by rotation of the housing around the axis of the rotor.

The impact section 40 contains in the stator 48 replaceable, adjustable impact plates or surface portions 48A, in which the residue that is dropped into the seed destructor housing is flung against by the rotors 46 with blades 46B and 46C. The residue is deflected back by the stator into the rotating blades for another hit.

The fan section 41 at the bottom of the housing acts to accelerate the residue for spreading back onto the field or into the chopper or into the chopper fins as desired.

The rotors can be driven by hydraulic motors which power and mount the rotating hubs 46 in which case the motors are mounted to the frame 37.

The impact plates 48A are rotatably adjustable at the apex 48D and designed to deflect the residue back into the high speed blades. The guide fins 48G on the impact plates serve to control the angle that the residue is deflected and therefore the number of times the residue rotates in the housing and thus the number of hits a seed encounters in its passage through the destructor. The impact plates 48A are replaceable and are hard surface coated for a longer life.

At the bottom of the housing assembly below the fan section 41 is provided a bottom plate 60 closing the bottom of the fan section 41 below the plate 50. In the plate 60 is defined an air inlet schematically indicated at 62 which regulates the flow of exterior air into the fan section through the plate 60. The opening size of the air inlet 62 can also be varied by an adjustment 62A. As the adjustment 62A control the amount of air entering into the fan section, this adjustment increases or reduces the amount of air drawn through the opening 50A in the plate 50 and thus also serves to change the speed of the residue flowing through the assembly. The air inlet 62 can be regulated so that, as it is closed off, the speed of the residue flow increases, to the point when closed, all air is sucked in from the top of the assembly at the plate 44, to be discharged with the fan in the discharge zone 41. When entirely opened the majority of the air is drawn from the bottom plate 60 of the assembly and the speed of the residue flowing through the assembly is reduced allowing for more impacts.

A third method to adjust the number of impacts a seed encounters through the assembly is of course with the speed of the rotor 46. The drive system to the rotor can be controlled by the combine or by a separate driver operated control and the speed of the assembly can be increased or decreased depending on factors such as seed size, residue toughness, or residue size including factors such as corn cob size and moisture content or sunflower head size.

In a preferred arrangement, the seed destructor section 36 is integrated into the chopper 9 as a common unit with the chopper 9. In this arrangement the seed destruction section 36 acts two receive all residue from the sieves. The weed seeds are destroyed in the seed destructor and can be ejected into the chopper for spread with the straw residue on the tailboard 16A.

In this arrangement the combination of all of the residue from both the sieves and the straw exit into the chopper allows the destroyed seeds and chaff residue to mix with the straw residue and be spread in a much wider spread pattern. That is in Figure 6, the discharge openings 41C from the fan section 41 of the seed destruction section 36 are turned on the frame 37 so that they are directed to the center of the inlet 12 of the chopper 9.

Alternatively the chaff residue and destroyed seeds expelled from the seed destructor at the discharge openings 41C is expelled at the sides of the chopper at the fan sections 30 so as to bypass the center chopper section of the chopper so as to be directed by the chopper into the fins of the chopper for mixing on the tailboard 16A and spreading with the straw residue from the chopper.

As a third option, the discharge openings 41C can be positioned to the side to spread to the side of the combine as shown in Figure 1. Thus the seed destruction section 36 is a part of or closely associated with the chopper 9. However the position of the outlet in the embodiment of Figure 14 can be adjusted to the side in the same manner by rotation of the housings on the frame 37.

Thus the destruction section 36 and the chopper 9 form a common unit which can be supplied as a common assembly for attachment to the combine harvester. The common unit may include a common frame. The common unit can include a common drive arrangement by which a single output drive from the combine harvester is directed to the common unit and then directed by the drive mechanism to the chopper rotor and to the seed destruction section. The common unit can be arranged so that in one or more adjustment positions of the seed of destruction section the output from the fan section is directed into the chopper for common distribution into the field. It is also possible in this arrangement that the seed destruction section be adjusted so that the output therefrom is directed into the field bypassing the chopper.

In an arrangement where the space between the sieve 2 and the straw outlet is greater than can be accommodated by direct feed from the sieve into the inlet of the seed destruction section, a feed duct or other transfer arrangement can be provided.

Thus the combined apparatus comprises the straw chopper 9 as described above together with the apparatus for destroying weed seeds as described above where the discharge opening of the housing is arranged such that the discharge opening can be directed to the side of the combine away from the straw chopper, towards the guide fins of the tailboard of the chopper, or into the housing of the straw chopper.

As an alternate embodiment shown in Figure 8 the apparatus can be designed as a horizontal tube 70 into which the material is fed from the sieve 2 by a feed duct 2A. This can be readily located at this position by a combine manufacturer as a horizontal duct in their combine at a position ahead of the rear discharge for chaff.

The tube 70 has a transverse shaft 71 driven at one end 72 and carried on end walls of the tube 70 at bearings 73. The shaft carries auger fighting 74A, 74B in the middle moving chaff outwardly to an impact zone 75 at each end of the horizontal rotor. The arrangement thus provides a seed destructor symmetrical to and operating in the same manner as that previously described but arranged in an orientation at 90 degrees to that shown previously and rotating in a vertical plane about a horizontal axis defined by the shaft 71. Thus the destructor 75 includes a rotor 77 and stator 78 as previously described and a fan section 79 so that the discharge zone 76 is located at the end to expel into a secondary spreading device, or into a straw chopper or into the tail board fins of the straw chopper.

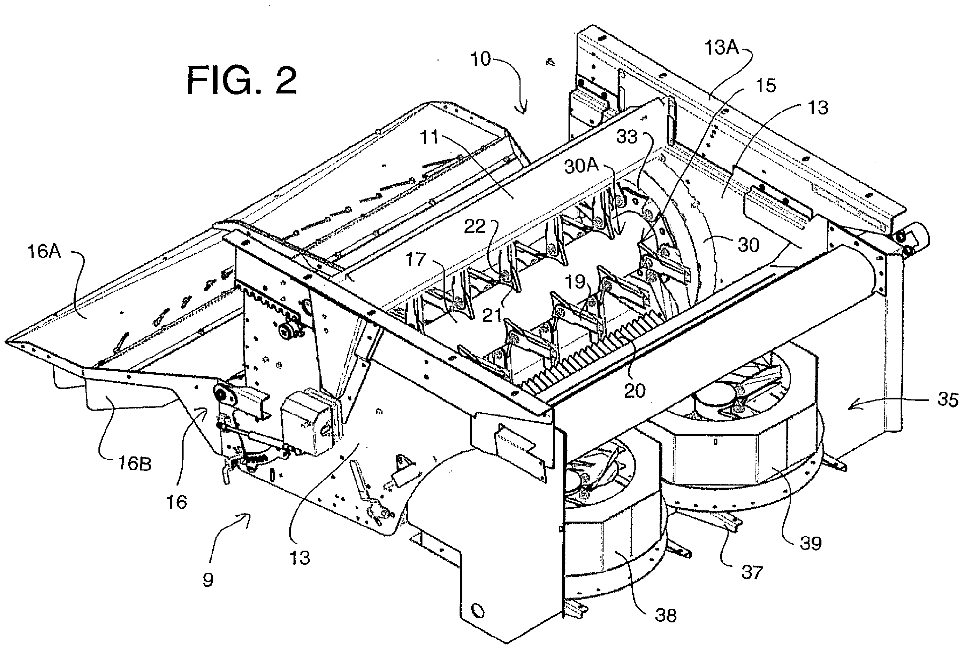

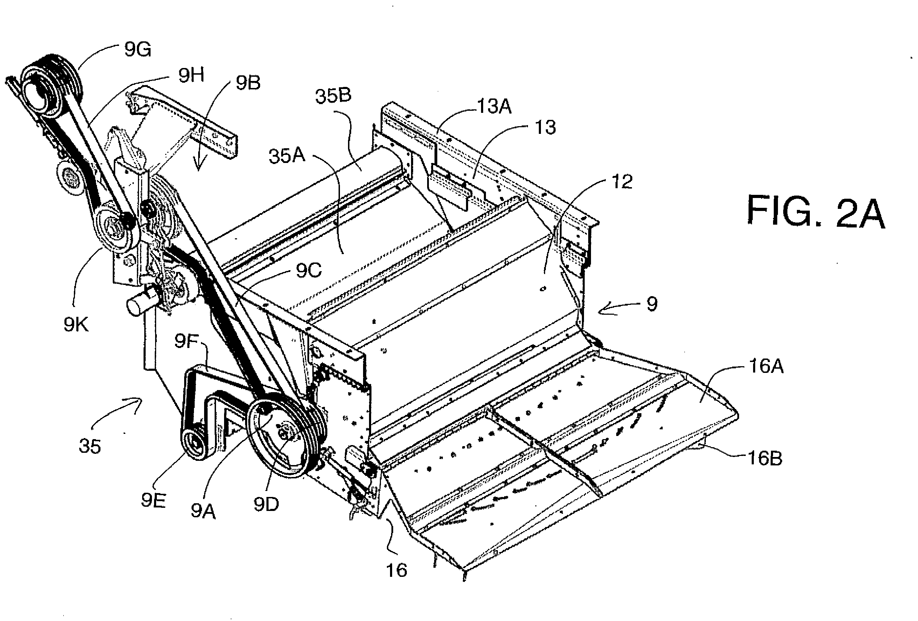

As shown in Figures 2A and 8 housing of the chopper section 9 and the seed destructor section 35 are formed as a common or integral construction coupled together as single or common unit which can be mounted on the combine harvester at the rear of the combine so as to be associated with the rear straw discharge and the rear chaff discharge.

The chopper 9 has an input drive pulley 9A connected to the rotor 17 driven by a belt 9C or other drive component or pulley assembly 9B from the combine. In addition the pulley 9A of the chopper drives an output pulley 9D which communicates drive to the seed of destruction section 35 through a pulley 9E driven by a belt 9F. In the arrangement shown the pulleys 9A and 9D are mounted at the same end of the rotor 17 but this is not essential. The drive 9B to the chopper can be as shown where the output shaft 9G of the combine drives a belt 9H connected to a pulley system 9K to drive the belt 9C; but of course other drive arrangements can be used such as a shaft from an output gearbox.

A shroud or hood 35A is over the seed destructor section to allow for the chaff to be directed underneath the hood into the seed destructor. A roller 35B is required at the leading edge of the hood 35A to eliminate material buildup on the leading edge which could cause possible plugging. The roller rotates in a clockwise direction at 200-500 rpm to roll any long straw over to the chopper section 9 while the chaff and weed seeds flow under the hood the destructor section 35.

While the arrangement shown herein is shown as an externally mounted chopper carried on the combine harvester at the rear straw discharge, some combines include an internal chopper mounted in the housing at a position in advance of the rear discharge. In this arrangement the seed destructor section can be located at the chaff discharge and arranged to direct material into the internal chopper or away from the internal chopper to the ground. In this case the internal chopper does not cooperate directly with a spreading system such as a tail board.

Since various modifications can be made in my invention as herein above described, and many apparently widely different embodiments of same made within the scope of the claims without department from such scope, it is intended that all matter contained in the accompanying specification shall be interpreted as illustrative only and not in a limiting sense.

## Claims

1. Apparatus (35) for destroying weed seeds comprising:
a housing (10) arranged to be mounted at a location on a combine harvester (1) for receiving from the location a feed material containing separated chaff and weed seeds separated by the combine harvester from harvested crop;
a rotor (46) mounted in the housing (10) for rotation about an axis (47) and
including rotor surfaces thereon for engaging the feed material and for accelerating the feed material in a direction outwardly from the axis (47) of the rotor (46);
a stator (48) arranged at a location along the direction and including one or more stator surfaces (48A) for engaging the weed seeds in the accelerated feed material;
said stator (48) and said one or more stator surfaces (48A) of the stator (48) being arranged such that the weed seeds impact on said one or more stator surfaces (48A) and do not pass through the stator (48) along said direction but instead are rebounded therefrom back toward the rotor (46);
the rotor (46) and stator (48) being arranged such that the weed seeds rebound back and forth between the rotor (46) and the stator (48) to provide a plurality of impacts on the accelerated feed material to destroy at least some of the weed seeds;
the apparatus being **characterised in that** the housing (10) includes a discharge opening (41C) for discharge of the feed material after the plurality of impacts;
where the discharge opening (41C) is at a location different from the stator (48) so that said weed seeds discharged from the rotor (46) through said discharge opening (41C) do not pass through the stator (48);
and **in that** the stator (48) surrounds the axis (47) and wherein the discharge opening (41C) is arranged such that the discarded seeds are moved axially from within the stator (48) to the discharge opening (41C).

2. The apparatus (35) according to claim 1 wherein the feed material enters the housing (10) in a direction generally axially of the rotor (46) at a feed end of the rotor (46) and moves axially along the rotor (46) to said discharge opening (41C) at a discharge end of the rotor (46) opposite the feed end of the rotor (46).

3. The apparatus (35) according to claims 1 or 2 wherein there is provided a fan component at said discharge opening (41C) for driving the weed seeds from said discharge end.

4. The apparatus (35) according to claim 3 wherein the fan component is mounted on the rotor (46) for rotation therewith.

5. The apparatus (35) according to any one of claims 1 to 4 wherein the stator (48) includes a plurality of stator surfaces (48A) spaced angularly around the axis (47).

6. The apparatus (35) according to any one of claims 1 to 5 wherein said at least one stator surface (48A) is arranged at an angle to a tangent of an imaginary cylindrical surface surrounding the axis (47).

7. The apparatus (35) according to claim 6 wherein the angle of the stator surface (48A) to the tangent is adjustable.

8. The apparatus (35) according to any one of claims 1 to 7 wherein at least one of the rotor surfaces and/or at least one of the stator surfaces (48A) is arranged to pivot to a position to increase a spacing between the stator and rotor surfaces to allow the passage of foreign objects between the rotor and stator surfaces.

9. The apparatus (35) according to any one of claims 1 to 8 wherein at least one of the rotor surfaces and/or at least one of the stator surfaces (48A) is readily removable for replacement when damaged or worn.

10. The apparatus (35) according to any one of claims 1 to 9 wherein the stator (48) includes one or more fins (48G) extending generally in a radial plane around the axis (47).

11. The apparatus (35) according to any one of claims 1 to 10 wherein the housing (10) when viewed in plan longitudinal of the axis (47) of the rotor (46) is of polygonal shape to define a plurality of apexes at angularly spaced positions around the axis (47) and said at least one stator surface (48A) in said plan view includes a plurality of pairs of stator surfaces (48A) which form a V shape converging to a respective one of the apexes.

12. The apparatus (35) according to any one of claims 1 to 11 wherein the rotational speed of the rotor (46) is adjustable to change the number of impacts a seed encounters during its passage.

13. The apparatus (35) according to any one of claims 1 to 12 wherein the velocity of air along the rotor (46) is adjustable to change the number of impacts a seed encounters during its passage.

14. The apparatus (35) according to any one of claims 1 to 13 wherein the rotor (46) and the stator (48) are arranged so that the impacts act to move the discarded seeds axially along the rotor (46) so as to change the position along the rotor (46) at which the impacts of the discarded seeds occurs.

15. The apparatus (35) according to any one of claims 1 to 14 wherein there is provided two housings (10) each including a rotor (46) and stator (48) arranged side by side across a width of the location.

16. The apparatus (35) according to any one of claims 1 to 15 wherein the housing (10) is rotatable about the axis (47) of the respective rotor (46) to change an angle of the discharge around the axis (47).

## Patentansprüche

1. Vorrichtung (35) zum Zerstören von Unkrautsamen, umfassend:
ein Gehäuse (10), das so angeordnet ist, dass es an einem Ort auf einem Mähdrescher (1) montiert werden kann, um von dem Ort ein Futtermaterial aufzunehmen, das getrennte Spreu und Unkrautsamen enthält, die durch den Mähdrescher von der Ernte getrennt sind;
einen in dem Gehäuse (10) montierten Rotor (46) zur Drehung um eine Achse (47) und mit darauf befindlichen Rotorflächen zum Eingreifen in das Futtermaterial und zum Beschleunigen des Futtermaterials in einer Richtung nach außen von der Achse (47) des Rotors (46);
einen Stator (48), der an einer Stelle entlang der Richtung angeordnet ist und eine oder mehrere Statoroberflächen (48A) zum Eingreifen der Unkrautsamen in das beschleunigte Futtermaterial enthält;
wobei der Stator (48) und die eine oder mehreren Statorflächen (48A) des Stators (48) so angeordnet sind, dass die Unkrautsamen auf die eine oder die mehreren Statorflächen (48A) auftreffen und nicht entlang der Richtung durch den Stator (48) laufen, sondern stattdessen von diesem zurück zum Rotor (46) zurückprallen;
wobei der Rotor (46) und der Stator (48) so angeordnet sind, dass die Unkrautsamen zwischen dem Rotor (46) und dem Stator (48) hin und her zurückprallen, um eine Vielzahl von Stößen auf das beschleunigte Futtermaterial bereitzustellen, um zumindest einen Teil der Unkrautsamen zu zerstören;
wobei die Vorrichtung **dadurch gekennzeichnet ist, dass** das Gehäuse (10) eine Abgabeöffnung (41C) zum Ablassen des Futtermaterials nach der Vielzahl von Stößen aufweist, wobei sich die Abgabeöffnung (41C) an einer vom Stator (48) verschiedenen Stelle befindet, so dass die vom Rotor (46) durch die Abgabeöffnung (41C) abgegebenen Unkrautsamen nicht durch den Stator (48) gelangen;
und dadurch, dass der Stator (48) die Achse (47) umgibt und wobei die Abgabeöffnung (41C) so angeordnet ist, dass die weggeworfenen Samen axial von innerhalb des Stators (48) zur Abgabeöffnung (41C) bewegt werden.

2. Vorrichtung (35) nach Anspruch 1, wobei das Futtermaterial in einer Richtung allgemein axial des Rotors (46) an einem Zufuhrende des Rotors (46) in das Gehäuse (10) eintritt und sich axial entlang des Rotors (46) zu der Abgabeöffnung (41C) an einem Entladungsende des Rotors (46) gegenüber dem Zufuhrende des Rotor (46) bewegt.

3. Vorrichtung (35) nach einem der Ansprüche 1 oder 2, wobei an der Abgabeöffnung (41C) eine Ventilatorkomponente vorgesehen ist, um die Unkrautsamen von dem Ausstoßende zu treiben.

4. Vorrichtung (35) nach Anspruch 3, wobei die Lüfterkomponente zur Drehung damit auf dem Rotor (46) montiert ist.

5. Vorrichtung (35) nach einem der Ansprüche 1 bis 4, wobei der Stator (48) eine Vielzahl von Statoroberflächen (48A) enthält, die winkelig um die Achse (47) beabstandet sind.

6. Vorrichtung (35) nach einem der Ansprüche 1 bis 5, wobei die mindestens eine Statorfläche (48A) in einem Winkel zu einer Tangente einer imaginären zylindrischen Oberfläche angeordnet ist, die die Achse (47) umgibt.

7. Vorrichtung (35) nach Anspruch 6, wobei der Winkel der Statoroberfläche (48A) zur Tangente einstellbar ist.

8. Vorrichtung (35) nach einem der Punkte 1 bis 7, wobei mindestens eine der Rotorflächen und/oder mindestens eine der Statorflächen (48A) so angeordnet ist, dass sie in eine Position schwenkt, um einen Abstand zwischen der Stator- und der Rotorfläche zu vergrößern, um den Durchgang von Fremdkörpern zwischen der Rotor- und Statorfläche zu ermöglichen.

9. Vorrichtung (35) nach einem der Ansprüche 1 bis 8, wobei mindestens eine der Rotorflächen und/oder mindestens eine der Statorflächen (48A) zum Ersetzen leicht entfernt werden kann, wenn sie beschädigt oder abgenutzt ist.

10. Vorrichtung (35) nach einem der Ansprüche 1 bis 9, wobei der Stator (48) eine oder mehrere Rippen (48G) aufweist, die sich allgemein in einer radialen Ebene um die Achse (47) erstrecken.

11. Vorrichtung (35) nach einem der Ansprüche 1 bis 10, wobei das Gehäuse (10), wenn es in der Planlängsrichtung der Achse (47) des Rotors (46) betrachtet wird, eine polygonale Form aufweist, um eine Vielzahl von Spitzen an winkelmäßig beabstandeten Positionen um die Achse (47) zu definieren und die mindestens eine Statorfläche (48A) in der Plansicht eine Vielzahl von Paaren von Statoroberflächen (48A) umfasst, die eine V-Form bilden, die zu einer jeweiligen Spitzen konvergiert.

12. Vorrichtung (35) nach einem der Ansprüche 1 bis 11, wobei die Drehzahl des Rotors (46) einstellbar ist, um die Anzahl der Stöße zu ändern, denen ein Saatgut während seines Durchgangs ausgesetzt ist.

13. Vorrichtung (35) nach einem der Ansprüche 1 bis 12, wobei die Luftgeschwindigkeit entlang des Rotors (46) einstellbar ist, um die Anzahl der Stöße zu ändern, denen ein Saatgut während seines Durchgangs ausgesetzt ist.

14. Vorrichtung (35) nach einem der Ansprüche 1 bis 13, wobei der Rotor (46) und der Stator (48) so angeordnet sind, dass die Stöße die weggeworfenen Samen axial entlang des Rotors (46) bewegen, um die Position entlang des Rotors (46) zu ändern, an der die Stöße der weggeworfenen Samen erfolgen.

15. Vorrichtung (35) nach einem der Ansprüche 1 bis 14, wobei zwei Gehäuse (10) vorgesehen sind, die jeweils einen Rotor (46) und einen Stator (48) enthalten, die nebeneinander über eine Breite des Ortes angeordnet sind.

16. Vorrichtung (35) nach einem der Ansprüche 1 bis 15, wobei das Gehäuse (10) um die Achse (47) des jeweiligen Rotors (46) drehbar ist, um einen Winkel der Abgabe um die Achse (47) zu ändern.

## Revendications

1. Appareil (35) pour la destruction de graines de mauvaises herbes, comprenant :
un boîtier (10) prévu pour être monté à un emplacement d'une moissonneuse-batteuse (1) afin de recevoir depuis cet emplacement un matériau d'alimentation contenant de la balle séparée et des graines de mauvaises herbes séparées par la moissonneuse-batteuse de la récolte coupée ; un rotor (46) monté dans le boîtier (10) pour tourner autour d'un an axe (47) et présentant des surfaces de rotor entrant en prise avec le matériau d'alimentation et accélérant le matériau d'alimentation dans une direction vers l'extérieur de l'axe (47) du rotor (46) ;
un stator (48) disposé à un emplacement dans la direction et comprenant une ou plusieurs surfaces de stator (48A) pour engager les graines de mauvaises herbes dans le matériau d'alimentation accéléré ;
le stator (48) et la ou les surfaces de stator (48A) du stator (48) étant prévus de telle manière que les graines de mauvaises herbes heurtent la ou les surfaces de stator (48A) et ne traversent pas le stator (48) dans la direction, mais sont repoussées de celui-ci vers le rotor (46) ;
le rotor (46) et stator (48) étant prévus de telle manière que les graines de mauvaises herbes rebondissent en va-et-vient entre le rotor (46) et le stator (48) pour obtenir une pluralité d'impacts sur le matériau d'alimentation accéléré afin de détruire au moins une partie des graines de mauvaises herbes ;
ledit appareil étant **caractérisé en ce que**
le boîtier (10) présente une ouverture de refoulement (41C) pour évacuer le matériau d'alimentation après la pluralité d'impacts ;
l'ouverture de refoulement (41C) étant à un emplacement différent du stator (48) de sorte que les graines de mauvaises herbes refoulées du rotor (46) par l'ouverture de refoulement (41C) ne traversent pas le stator (48) ;
et **en ce que** le stator (48) entoure l'axe (47) et l'ouverture de refoulement (41C) est prévue de telle manière que les graines rejetées sont déplacées axialement de l'intérieur du stator (48) vers l'ouverture de refoulement (41C).

2. Appareil (35) selon la revendication 1, où le matériau d'alimentation pénètre dans le boîtier (10) dans une direction sensiblement axiale du rotor (46) à une extrémité d'alimentation du rotor (46), et se déplace axialement le long du rotor (46) vers l'ouverture de refoulement (41C) à une extrémité de refoulement du rotor (46) opposée à l'extrémité d'alimentation du rotor (46).

3. Appareil (35) selon la revendication 1 ou la revendication 2, où un composant de ventilation est prévu sur l'ouverture de refoulement (41C) pour entraîner les graines de mauvaises herbes depuis l'extrémité de refoulement.

4. Appareil (35) selon la revendication 3, où le composant de ventilation est monté sur le rotor (46) pour tourner avec celui-ci.

5. Appareil (35) selon l'une des revendications 1 à 4, où le stator (48) présente une pluralité de surfaces de stator (48A) espacées angulairement autour de l'axe (47).

6. Appareil (35) selon l'une des revendications 1 à 5, où ladite au moins une surface de stator (48A) est disposée suivant un angle à une tangente d'une surface de cylindre imaginaire entourant l'axe (47).

7. Appareil (35) selon la revendication 6, où l'angle entre la surface de stator (48A) et la tangente est réglable.

8. Appareil (35) selon l'une des revendications 1 à 7, où au moins une des surfaces de rotor et/ou au moins une des surfaces de stator (48A) sont prévues de manière à pivoter vers une position augmentant un espacement entre les surfaces de stator et des surfaces de rotor pour permettre le passage d'objets étrangers entre les surfaces de stator et les surfaces de rotor.

9. Appareil (35) selon l'une des revendications 1 à 8, où au moins une des surfaces de rotor et/ou au moins une des surfaces de stator (48A) sont aisément amovibles pour remplacement en cas de dommage ou d'usure.

10. Appareil (35) selon l'une des revendications 1 à 9, où le stator (48) comporte une ou plusieurs ailettes (48G) s'étendant sur un plan sensiblement radial autour de l'axe (47).

11. Appareil (35) selon l'une des revendications 1 à 10, où, en vue en plan longitudinal de l'axe (47) du rotor (46), le boîtier (10) a une forme polygonale définissant une pluralité de sommets à des emplacements espacés angulairement autour de l'axe (47) et où, en vue en plan, ladite au moins une surface de stator (48A) présente une pluralité de paires de surfaces de stator (48A) en forme de V convergeant vers des sommets respectifs.

12. Appareil (35) selon l'une des revendications 1 à 11, où la vitesse de rotation du rotor (46) est réglable pour varier le nombre d'impacts subis par une graine pendant son passage.

13. Appareil (35) selon l'une des revendications 1 à 12, où la vitesse de l'air le long du rotor (46) est réglable pour varier le nombre d'impacts subis par une graine pendant son passage.

14. Appareil (35) selon l'une des revendications 1 à 13, où le rotor (46) et le stator (48) sont disposés de telle manière que les impacts permettent de déplacer axialement les graines rejetées le long du rotor (46) afin de varier l'emplacement où se produisent les impacts des graines rejetées le long du rotor (46).

15. Appareil (35) selon l'une des revendications 1 à 14, où sont prévus deux boîtiers (10) comprenant chacun un rotor (46) et un stator (48) juxtaposés dans la largeur de l'emplacement.

16. Appareil (35) selon l'une des revendications 1 à 15, où le boîtier (10) est rotatif autour de l'axe (47) du rotor (46) respectif pour varier l'angle de refoulement autour de l'axe (47).
